**Europäisches Patentamt**

**European Patent Office**

**Office européen des brevets**

(19)

(11) Veröffentlichungsnummer: **0 359 891 B1**

# (12) EUROPÄISCHE PATENTSCHRIFT

(45) Veröffentlichungstag der Patentschrift:
14.08.91 Patentblatt 91/33

(51) Int. Cl.⁵: **H02G 1/12**

(21) Anmeldenummer: **88850315.8**

(22) Anmeldetag: **20.09.88**

(54) Anordnung zum Abisolieren.

(43) Veröffentlichungstag der Anmeldung:
28.03.90 Patentblatt 90/13

(45) Bekanntmachung des Hinweises auf die
Patenterteilung:
14.08.91 Patentblatt 91/33

(84) Benannte Vertragsstaaten:
**CH DE ES FR GB IT LI SE**

(56) Entgegenhaltungen:
**EP-A- 0 145 049**
**GB-A- 1 025 626**
**US-A- 3 363 309**
**I.B.M. TECHNICAL DISCLOSURE BULLETIN**
**vol. 8, no. 1, Juni 1965, New York Seite 63 - 64;**
**j.e. Adams: "Wire Stripper"**

(73) Patentinhaber: **C.A. WEIDMÜLLER GMBH & CO.**
**Postfach 950**
**W-4930 Detmold (DE)**

(72) Erfinder: **Wiebe, Ulrich**
**Kibitzweg 2**
**W-4930 Detmold (DE)**
Erfinder: **Boche, Bernhard**
**Rötkersick 58**
**W-4930 Detmold (DE)**

(74) Vertreter: **Klauber, Tomas et al**
**Patentbyran Klauber & Co. AB**
**Kungstensgatan 48**
**S-113 59 Stockholm (SE)**

## Beschreibung

Die Erfindung bezieht sich auf ein Werkzeug oder Gerät zu genauem und sauberem Abisolieren, in Übereinstimmung z.B. mit den für Luft- und Raumfahrt geltenden Forderungen, von Enden elektrischer Leiter, insbesondere solcher die mit einer besonders harten Isolation, wie z.B. aus "Kapton" (eingetragenes Warenzeichen) oder ähnlichem Material, versehen sind. Gemäss den erwähnten Forderungen muss gewährleistet sein, dass auch der Endteil der nach dem Abisolieren des Leiterendes am Leiter verbleibenden Isolation völlig intakt ist, d.h. insbesondere keine Spuren von Verquetschungen oder Verklemmungen aufweist, denn auch eine unbedeutende Beschädigung könnte später zu Rissbildung u.dgl. führen.

Eine grosse Anzahl von Abisolierzangen ist bekannt, die ein Paar zu- und voneinander bewegbarer Haltebacken aufweisen in denen ein Paar ebenfalls zu- und voneinander bewegbarer Schneidebacken angeordnet ist. Die Schneidebacken sind an ihren freien vorderen Enden mit Abisoliermessern versehen, die bei dem — durch das Schliessen der Haltebacken herbeigeführten — Schliessen der Schneidebacken die Isolation eines eingelegten Leiters bis zu einer bestimmten Tiefe durchschneiden, und dadurch einen das Leiterende blosslegenden Endteil der Isolation abtrennen.

Diese Zangen sind ferner so angeordnet, dass die Schneidebacken nach ihrem Schliessen im Haltebackenpaar eine Rückwärtsbewegung von einer vorderen Einschnittslage aus durchführen, um den abgetrennten Teil der Isolation vom Leiter abzustreifen. Die Haltebacken sind hierbei an ihren freien vorderen Enden mit Eingriffsorganen zum Festklemmen eines eingelegten Leiters versehen, damit dieser beim Abstreifvorgang zurückgehalten wird um nicht an der Rückwärtsbewegung der Schneidebacken teilzunehmen, denn amsonsten würde kein Abstreifen des abgetrennten Isolationsteiles stattfinden.

Die Eingriffsorgane sind hierbei so gestaltet, z.B. wie stumpfe Anpressklötze, dass die Isolation an dem zwischen ihnen befindlichen Teil des Leiters zwar festgeklemmt, aber am wenigsten von allem von ihnen durchschnitten wird ; Verpressungen und Verquetschungen in grösserem oder kleinerem Umfang an den Angriffstellen der Eingriffsorgane sind hierbei jedoch kaum zu vermeiden.

Eine derartige vorbekannte Abisolierzange ist z.B. in US-A-4,627,314 und in der gleichinhaltlichen EP-A-0145049 beschrieben. Sie weist Abisoliermesser auf, deren Schneidkanten in der Ebene der einen Begrenzungsfläche des Messerkörpers liegen und im mittleren Bereich eine kreisbogenförmige Einbuchtung aufweisen welche das eigentliche Schneidorgan bildet. Diese vorbekannte Zange ist ferner mit einer Zentriervorrichtung versehen, die in zumindest einer Schneidebacke einen abgefederten Trägerarm umfasst mit einer fluchtend mit der genannten Einbuchtung angeordneten Einkerbung, sowie zwei beiderseits der Einbuchtung in gegenseitigem Abstand angeordnete Leitstücke in Form von Zentrierblöcken aufweist.

Ferner ist aus der US-A-4,395,928 oder der gleichinhaltlichen DE-C-3,134.311 eine Abisolierzange mit der oben beschriebenen Arbeitsweise der Halte- und Schneidebacken bekannt, die revolverförmig gestaltet ist.

In GB-A-1,025,626 ist ein rohrförmiges Abisoliergerät beschrieben, welches in einem zylindrischen Gerätekörper eine gleitbar angeordnete erste Hülse, und in dieser eine gleitbar angeordnete zweite Hülse enthält. Beide Hülsen sind axial aufgeschlitzt und an ihren äusseren Enden mit nach innen gerichteten Schneidekanten versehen.

Der Gerätekörper ist inwendig, und die erste Hülse auswendig mit einem konischen Kragen versehen, so dass wenn die erste Hülse zusammen mit der zweiten Hülse im Gerätekörper axial verlagert wird, schliessen sich die Schneidekanten beider Hülsen um einen in ihre gemeinsame Eintrittsöffnung eingeführten isolierten Leiter. Die Schneidekanten beider Hülsen, die hierbei eng beieinader liegen, durchschneiden die Isolation des Leiters, und bei nachfolgender axialer Verlagerung der zweiten Hülse in der ersten streifen deren Schneidebacken die Isolation von der Endpartie des Leiters ab, während diejenigen der ersten Hülse die Isolation am Hauptkörper des Leiters festhalten. Die gemeinsame axiale Verlagerung beider Hülsen im Gerätekörper wird von einer Feder herbeigeführt.

Diese Konstruktion eignet sich nicht zu absolut sauberem Abisolieren von Leitern mit z.B. Teflonisolierung, da ein derart sauberes Abisolieren nur dann möglich ist, wenn die Isolation tatsächlich ringsherum sauber eingeschnitten, und nicht stellenweise (nämlich an den den axialen Schlitzen entsprechenden Stellen) nur gequetscht wird. Bei harten Isolationen besteht ausserdem das Risiko, dass die Federkraft nicht dazu ausreichen könnte, alle Schneidkanten bis zur vorgesehenen Endlage in die Isolation hineinzuzwingen.

Eine Anordnung gemäß dem Oberbegriff des Anspruchs 1 ist aus US-A-3363309 bekannt.

Die vorliegende Erfindung stellt sich die Aufgabe, eine Abisolierzange zu schaffen, welche bezüglich der Intaktheit der am Leiter verbleibenden Isolation und der Sauberkeit des Trennschnittes (auch bei harten und/oder aus Teflon bestehenden Isolationsschichten) u.a. den oben erwähnten strengen Forderungen der Luft- und Raumfahrt genügt. Die Erfindung weist die im kennzeichnenden Teil des angeschlossenen Patentanspruchs 1 enthalten Merkmale auf, wobei vorteilhafte Weiterentwicklungen in Unteransprüchen angeführt sind.

Die Eingriffsorgane der Haltebacken werden somit erfindungsgemäss, und in direktem Gegensatz zur bisherigen Lehre, wie Messerorgane gestaltet, welche in der Isolation einen gleich tiefen Einschnitt herbeiführen wie die Abisoliermesserorgane in den Schneidebacken, wobei jedoch durch die Gestaltung und gegenseitige Anordnung der Messerorgane in den beiden Messerpaaren dafür gesorgt ist, dass nach wie vor ein einziger Einschnitt zustande kommt.

Während bei den herkömmlichen Abisolierzangen der Leiter bei der Rückwärtsbewegung der Schneidebacken durch Verklemmung zwischen den Eingriffsorganen der Haltebacken zurückgehalten wird, geschieht dies bei der erfindungsgemässen Anordnung dadurch, dass die Stirnfläche der durchschnittenen, am Leiter verbleibenden Isolation von den Messerorganen in den Haltebacken zurückgehalten wird, während die Stirnseite des abgetrennten Isolationteiles auf herkömmliche Weise von den Messern der Schneidebacken beaufschlagt wird, so dass dieser Isolationsteil zufolge der genannten Rückwärtsbewegung vom Leiterende abgestreift wird.

Die Erfindung soll nun an Hand von Ausführungsbeispielen gemäss den angeschlossenen schematischen Zeichnungen näher erläutert werden, wobei zur Veranschaulichung eine revolverförmige Abisolierzange gemäss der genannten US-A-4,395,928 oder DE-C-3,134.311 gewählt wurde ; es ist aber ausdrücklich anzuführen, dass die Anwendung der Erfindung keineswegs auf ein Werkzeug dieser Art beschränkt ist, sondern auch bei anderen Abisolierzangen, oder bei stationären Abisoliergeräten, sofern sie die beschriebene Arbeitsweise der Halte- und Schneidebacken aufweisen, zur Anwendung gelangen kann.

In den Zeichnungen zeigt :

Fig. 1 eine vorbekannte Abisolierzange gemäss US-A-4,395,928 bzw. DE-C-3,134.311 ;

Fig. 2a und 2b in Draufsicht und im Querschnitt entlang der Ebene IIB-IIB in Fig. 2a ein erfindugsgemäss abgewandeltes Abisoliermesser der in US-A-4,627,314 oder EP-A-0145049 gezeigten Art, welches mit Vorteil in der in der erfindungsgemässen Zange gemäss Fig. 3 angewandt werden kann) ;

Fig. 3 eine erfindungsgemässe Zange bzw. eine erfindungsgemäss abgewandelte Zange gemäss Fig. 1 ;

Fig. 4 im Querschnitt in grösserem Mass-stab die Messerschneidenpartie bei der Zange gemäss Fig. 3, und

Fig. 5 eine alternative Ausführung der Halte- und Schneidebacken bei einer erfindungsgemässen Abisolieranordnung.

Gleiche Bestandteile sind in allen Zeichnungsfiguren mit gleichen Bezugszeichen bezeichnet.

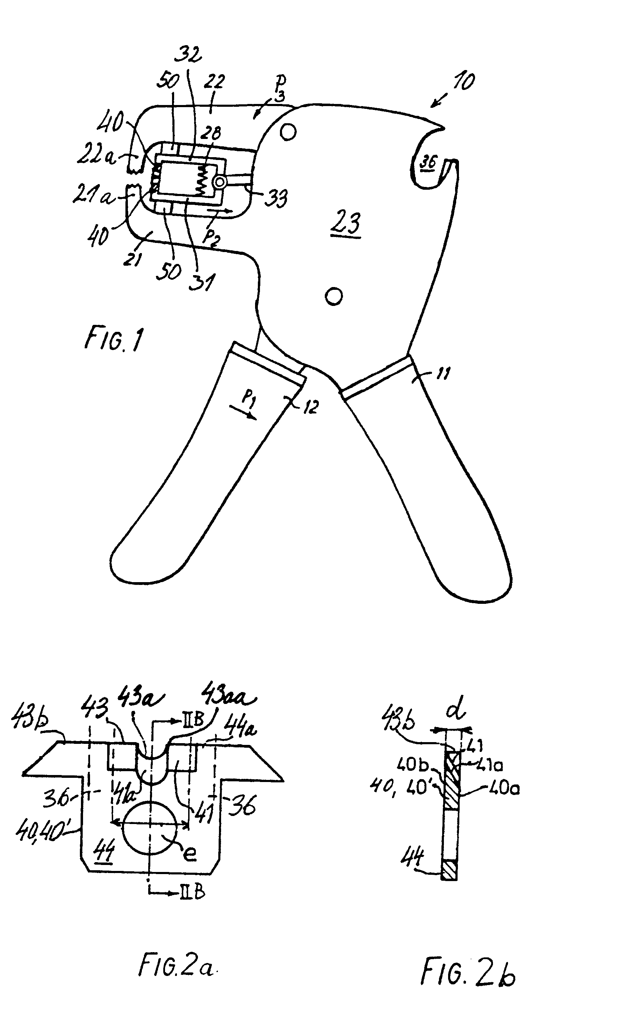

Gemäss Fig. 1, die also nicht die vorliegende Erfindung betrifft, weist eine vorbekannte Abisolierzange 10 einen Werkzeugkörper 23 auf, an den eine erste Haltebacke 21 und ein erster Handgriff 11 starr, sowie eine zweite Haltebacke 22 und ein zweiter Handgriff 12 gelenkig angeschlossen sind. Innerhalb des Haltebackenpaares 21, 22 ist ein von einer Druckfeder 28 auseinander gehaltenes, und von einem Ziehhebel 33 beaufschlagbares Schneidebackenpaar 31, 32 gleitbar angeordnet. Die Haltebacken 21, 22 weisen an ihren freien Enden Eingriffsorgane in Form von stumpfen Anpressklötzen 21a, 22a auf.

Im Inneren des Werkzeugkörpers 23 befindet sich ein Mechanismus zum Umwandeln einer Bewegung des Handgriffes 12 im Sinne des Pfeiles $P_1$ zu einer Bewegung der Haltebacke 22 im Sinne des Pfeiles $P_3$ (diese Bewegung wird z.B. über einen Klotz 50 der Schneidebacke 22 vermittelt), sowie zu einer Bewegung des Ziehhebels 33 — und somit auch des Schneidebackenpaares 31, 32 — im Sinne des Pfeiles $P_2$. Im Werzeugkörper 23 ist ferner eine Schneideanordnung 36 zum Abschneiden gewünschter Leiterlängen vorgesehen. Der im Werkzeugkörper 23 angeordnete Mechanismus liegt ausserhalb des Rahmens der vorliegenden Erfindung, und ist in den früher erwähnten US-A-4,395,928 und DE-C-31134311 näher beschrieben.

An den vorderen freien Enden der beiden Schneidebacken 31, 32 sind identische Abisoliermesser angeordnet, z.B. Abisoliermesser gemäss US-A-4,627,314 und EP-A-0145049.

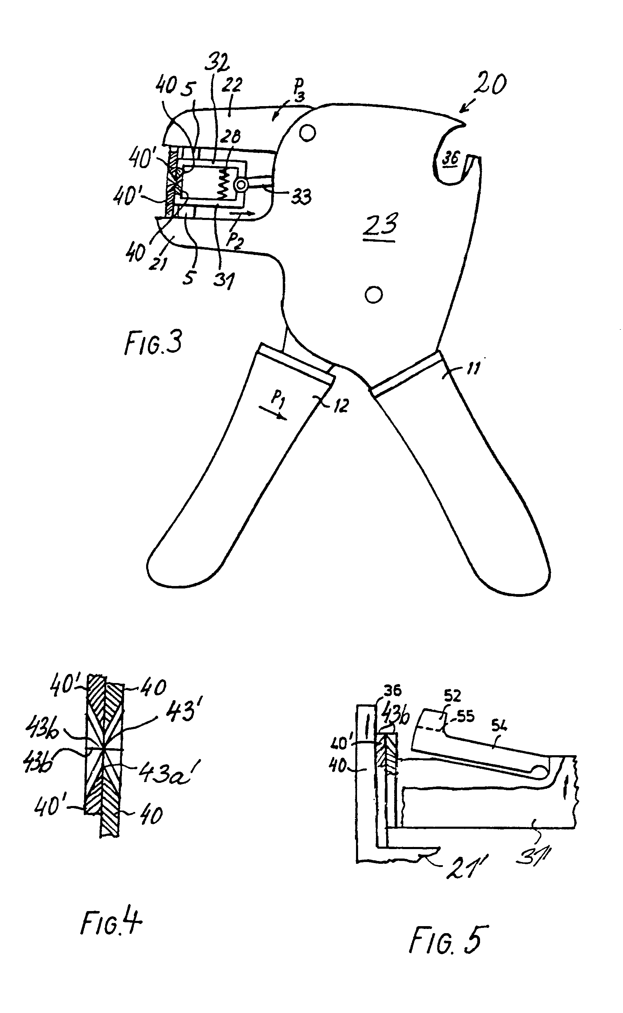

Die erfindugsgemässe Abisolierzange 20 gemäss Fig. 3 und 4 unterscheidet sich von der vorbekannten Zange 10 gemäss Fig. 1 insbesondere dadurch, dass die Haltebacken 21, 22 an ihren freien Enden an Stelle der stumpfen Klötze 21a, 22a starr angeschlossene Abisoliermesserorgane 40' tragen, wobei alle vier Messerorgane 40, 40' in den beiden Backenpaaren 21, 22 und 31, 32 identisch, und vorzugsweise gemäss Fig. 2a und 2b gestaltet sind.

Diese (in Fig. 3 Übersichtlichkeits halber mit übertriebener Dicke dargestellten) Messer 40, 40' weisen einen Messerkörper 44 auf, der von einer ersten Begrenzungsfläche 40a und einer zweiten Begrenzungsfläche 40b begrenzt ist. Entlang des mittleren Abschnittes der in Fig. 2a und 2b oberen Kante 44a des Messerkörpers 44 verbindet eine Abschrägung 41 die beiden Begrenzungsflächen 40a, 40b und bildet hierbei eine in der Ebene der zweiten Begrenzungsfläche 40b liegende geradlinige Schneidkante 43.

An den als Schneidkante gestalteten mittleren Abschnitt der Kante 44a schliessen sich beiderseits Endabschnitte 43b an, die in gleicher Höhe wie der geradlinige Schneidkantenabschnitt 43 liegen, hierbei aber stumpf sind, d.h. eine nicht vernachlässigbare Dicke d (Fig. 2b) aufweisen, so dass die scharfen Schneidkantenabschnitte 43 nicht übereinander fahren können.

Im mittleren Bereich der geradlinigen Schneidkante 43 ist in vorbekannter Weise ein kreisbogenförmig eingebuchteter Schneidkantenabschnitt 43a vorgesehen, wobei der an ihn angrenzende Teil 41a der Abschrägung 41 zylinder- oder kegelförmig gestaltet ist. Die Endpunkte 43aa des eingebuchteten Schneidkantenabschnittes 43 liegen ebenfalls in gleicher Höhe wie die stumpfen Endabschnitte 43b.

Beim Schliessen der beiden Schneidebacken 31, 32 wird von den eingebuchteten Schneidkantenabschnitten 43a der beiden gegeneinander angeordneten Abisoliermesser 40 eine kreisrunde Öffnung frei gelassen, die dem Querschnitt des leitenden Kernes des abzuisolierenden Leiters entspricht. Dank den im geschlossenen Zustand des Messerpaares aneinander stossenden Endabschnitten 43b wird gewährleistet, dass ein eingelegter Leiter nicht eingeschnitten werden kann.

Es ist offensichtlich, dass in funktionsmässiger Hinsicht die Schneidkante auch bloss aus einem kreisbogenförmig eingebuchteten Abschnitt bestehen kann, d.h. ohne die geraden Schneidkantenabschnitte 43, und/oder ohne die stumpfen Endabschnitte 43b.

Die Messerorgane 40' und 40 sind hierbei so orientiert, dass ihre die Schneidkante 43, 43a enthaltenden zweiten Begrenzungsflächen 40b (Fig. 2b) einander zugekehrt sind, und die Zange 20 ist so ausgelegt, d.h. insbesondere sind die Halte- und Schneidebacken 31, 32 ; 21, 22 so dimensioniert, dass in Einschnittlage die beiden Messergruppen 40, 40' mit ihren zweiten Begrenzungsflächen 40b dicht, also ohne jeden Luftspalt, aneinander anliegen ; desgleichen ist auch der Fall mit den stumpfen Endabschnitten 43b, und den in gleicher Höhe mit ihnen liegenden geradlinigen Schneidkantenabschnitten 43 und Endpunkten 43aa der eingebuchteten Schneidkantenabschnitte 43.

Der Messerkörper 44 hat eine Querschnittsform bei der die Schneidkante 43, 43a seine äusserste Abgrenzung in Richtung zum Messerkörper im anderen Backenpaar hin (in Fig. 2b z.B. nach links hin) bildet, so dass kein vorstehender Teil des Messerkörpers der dichten Annäherung an die Schneidkante 43, 43a des Messerkörpers im anderen Backenepaar im Wege steht. Es ist ersichtlich, dass diese Bedingung auch dann erfüllt werden kann, wenn die Begrenzungsfläche, in der die Schneidkante liegt, schräg verläuft (in Fig. 2b schräg von links oben nach rechts unten), oder nicht eben ist (z.B. in Fig. 2b einen Bogen von links oben nach rechts unten bildet).

Zufolge der erfindungsgemässen Gestaltung und Anordnung der Messerorgane schmelzen in der Einschnittlage sowohl die geradlinigen Schneidkantenabschnitte 43, als auch die (in allen Messern gleich gestalteten und gleich tiefen) eingebuchteten Schneidkantenabschnitte 43a beider Messergruppen 40, 40' funktionsmässig zu einer einzigen Schneidkante 43', 43a' (Fig. 4) zusammen.

Unter "Einschnittlage" wird diejenige Lage verstanden, welche von den Halte- und Schneidebacken unmittelbar vor Beginn der Rückwärtsbewegung der Schneidebacken eingenommen wird, nachdem die Messer ihre tiefste Einschnittlage in der Isolation erreicht haben.

In Fig. 5 ist eine vorteilhafte, mit einer Zentrieranordnung gemäss US-A-4,627,314 oder EP-A-0145 049 versehene Ausführungsform einer erfindungsgemässen Schneidebacke 31' dargestellt. Die Schneidebacke 31' weist einen abgefederten bzw. federnden Trägerarm 54 auf, der an seinem dem Abisoliermesser 40 zugewandten freien Ende einen Führungsklotz 52 mit einer V-förmigen, Einkerbung 55 trägt. Die Einkerbung 55 fluchtet mit der Einbuchtug 43a' (Fig. 4) in den Abisoliermessern 40, 40' und führt einen eingelegten Leiter innerhalb des Schneidebackenpaares.

Die Haltebacke 21' weist an ihrem freien Ende, vor dem Abisoliermesser 40, zwei in US-A-4,627,314 oder EP-A-0145 049 näher beschriebene Leitstücke oder Zentrierblöcke 36 auf. Diese Zentrierblöcke flankieren beiderseitig, wie in Fig. 2a mit gestrichelten Linien angedeutet ist, die Einbuchtung 43a' bzw. den geradlinigen Schneidkantenabschnitt 43, d.h. sie sind im Anschlussgebiet der Endabschnitte 43b an einen scharfen Schneidkantenabschnitt 43, 43a angeordnet, und höchstens in einem solchen gegenseitigen Abstand e (Fig. 2a), welcher der gesamten Länge des oder der scharfen Schneidkantenabschnitte 43, 43a gleicht.

Das Abisoliermesser 40' ist auf nicht näher gezeigte Art starr mit der Haltebacke 21', und das Abisoliermesser 40 starr mit der Schneidebacke 31' verbunden.

Die mit den Backen 21', 31' zusammenarbeitenden (in Fig. 3 oberen) Halte- und Schneidebacken können analog ausgeführt sein, wobei jedoch der Führungsklotz am Trägerarm auch ohne Einkerbung gestaltet sein kann ; für nähere Einzelheiten bezüglich der Zentrieranordnung gemäss Fig. 5 wird auf die US-A-4,627,314 oder EP-A-0145 049 hingewiesen.

Die Abisoliermesser können auch anderer als in den Zeichnungen dargestellter Art sein, und gegebenen Falls verschiedenen Typs in den Haltebacken einerseits und in den Schneidebacken anderseits, so lange die Bedingung erfüllt wird, dass ihre Schneidkanten in einer Begrenzungsfläche des Messerkörpers liegen, die dicht an die entsprechende Begrenzungsfläche der Messer im anderen Backenpaar heranführbar ist. So können z.B., insbesondere in den Schneidebacken, auch Lamellenmesser gemäss Fig. 1 in US-A-3,915,037 angewandt werden, wenn ihre Schneidkante an einer Begrenzungsfläche angeordnet wird, welche der oben angeführten Bedingung entspricht.

## Patentansprüche

1. Anordnung (20) zum Abisolieren von elektrischen Leitern, die mit zwei Paaren Abisoliermesserorganen (40, 40 ; 40', 40') versehen ist, welche eine Einschnittlage, in der sie dicht aneinander liegen, und eine Endlage, in der sie in Längsrichtung des abzuisolierenden Leiters von einander entfernt liegen, einnehmen können, wobei die Schneidkanten (43, 43a ; 43', 43a') bei allen Messern (40, 40 ; 40', 40') in der Ebene einer Begrenzungsfläche (40b) des Messerkörpers liegen, und die Messer (40, 40 ; 40', 40') beider Paare mit diesen Begrenzungsflächen (40b) einander zugewandt sind, so dass die Schneidkanten (43, 43a ; 43', 43a') in der Einschnittlage, in gleicher Höhe und ohne Luftspalt einander anliegend, funktionmässig zu einer einzigen Schneidkante (43', 43a') zusammenschmelzen, **dadurch gekennzeichnet,** dass die Anordnung als eine an sich bekannte Zange (20) zum Abisolieren freier Enden elektrischer Leiter gestaltet ist, die ein Paar zu- und voneinander verschwenkbarer Haltebacken (21, 22) und ein Paar zu- und voneinander verschwenkbarer, innerhalb der Haltebacken (21, 22) von der Einschnittlage rückwärts verschiebbarer Schneidebacken (31, 32) aufweist, und dass eines (40, 40) der Messerpaare (40, 40, 40', 40') die Bestückung der Schneidebacken (31, 32) bildet, und das andere Messerpaar (40', 40') an den Haltebacken (21, 22) als einziges Organ angeordnet ist, mittels welchen die Haltebakken (21, 22) den am Leiter verbleibenden Teil der Isolation berühren und beim Abstreifen des abgetrennten Teiles der Isolation festhalten.

2. Anordnung nach Patentanspruch 1, **dadurch gekennzeichnet,** dass die Abisoliermesserorgane (40, 40') an ihrer mit der Schneidkante (43, 43a) versehenen Kante (44a) stumpfe Endbereiche (43b) aufweisen die in gleicher Höhe wie ein geradliniger Schneidkantenabschnitt (43) oder die Endpunkte (43aa) eines kreisbogenförmig eingebuchteten Schneidkantenabschnittes (43a) liegen.

3. Anordnung nach Patentanspruch 2, **dadurch gekennzeichnet,** dass zumindest eine der Schneidebacken (31') in an sich bekannter Weise mit einem federnden Trägerarm (54) mit einer V-förmigen Einkerbung (55) versehen ist, die mit einer gegeben Falls vorhandenen kreisbogenförmig eingebuchteten Schneidkante (43a) fluchtet.

4. Anordnung nach irgendeinem der vorangehenden Patentansprüche, **dadurch gekennzeichnet,** dass in zumindest einer Haltebacke (21, 22) in an sich bekannter Weise zwei den Schneidkantenabschnitt (43, 43a) flankierende Zentrierblöcke (36) in gegenseitigem Abstand (e) angeordnet sind, und beim Vorhandensein von stumpfen Endabschnitten (43b) an den Messerorganen (40, 40') sich im Anschlussgebiet dieser Endabschnitte (43b) an den scharfen Schneidkantenabschnitt (43, 43a) befinden.

5. Anordnung nach irgendeinem der vorangehenden Patentansprüche, **dadurch gekennzeichnet,** dass sie in an sich bekannter Weise als eine revolverförmige Abisolierzange gestaltet ist.

## Claims

1. An arrangement (20) for stripping electric wires, which is provided with two pairs of stripping blade members (40, 40 ; 40', 40') which can occupy a cutting-in position in which they are closely together and an end position in which they are disposed away from each other in the longitudinal direction of the wire to be stripped, wherein in the case of all blades (40, 40 ; 40', 40') the cutting edges (43, 43a ; 43', 43a') lie in the plane of a boundary surface (40b) of the blade body and the blades (40, 40 ; 40', 40') of both pairs are towards each other with said boundary surfaces (40b) so that in the cutting-in position, bearing against each other without an air gap and at the same level, the cutting edges (43, 43a ; 43', 43a') functionally fuse to provide a single cutting edge (43', 43a'), characterised in that the arrangement is in the form of a per se known tongs assembly (20) for stripping free ends of electric wires, which has a pair of holding jaws (21, 22) which are pivotable towards and away from each other, and a pair of cutting jaws (31, 32) which are pivotable towards and away from each other and which are displaceable rearwardly from the cutting-in position within the holding jaws (21, 22), and that one (40, 40) of the pair of blades (40, 40) forms the fitment means of the cutting jaws (31, 32) and the other pair of blades (40', 40') is arranged on the holding jaws (21, 22) as a single member, by means of which the holding jaws (21, 22) contact the part of the insulation which remains on the wire and hold it fast when stripping the severed part of the insulation.

2. An arrangement according to claim 1 characterised in that at their edges (44a) provided with the cutting edge (43, 43a), the stripping blade members (40, 40') have blunt end regions (43b) which lie at the same level as a rectilinear cutting edge portion (43) or the end points (43aa) of a cutting edge portion (43a) which is recessed in an arcuate configuration.

3. An arrangement according to claim 2 characterised in that at least one of the cutting jaws (31') is provided in per se known manner with a sprung support arm (54) with a V-shaped notch (55) which aligns with a cutting edge (43a) which may possibly be provided and which is recessed in an arcuate configuration.

4. An arrangement according to any one of the preceding claims characterised in that two centering blocks (36) which flank the cutting edge portion (43, 43a) are arranged at a mutual spacing (e) in at least one holding jaw (21, 22) in per se known manner and, when there are blunt end portions (43b) on the blade members (40, 40'), they are disposed in the region of said end portions (43b) adjoining the sharp cutting edge portion (43, 43a).

5. An arrangement according to any one of the preceding claims characterised in that it is in the form of a revolver-like stripping tongs assembly in per se known manner.

## Revendications

1. Dispositif (20) pour dénuder des fils électriques, qui est muni de deux paires de lames à dénuder (40, 40 ; 40', 40') qui peuvent prendre une position d'entaillage dans laquelle elles s'appliquent étroitement l'une contre l'autre, et une position finale dans laquelle elles sont écartées l'une de l'autre dans le sens longitudinal du fil à dénuder, les tranchants (43, 43a ; 43', 43'a) de toutes les lames (40, 40 ; 40', 40') se trouvant dans le plan d'une face de délimitation (40b) du corps de lame, et les lames (40, 40 ; 40', 40') des deux paires étant tournées l'une vers l'autre par ces faces de délimitation (40b), de sorte qu'en position d'entaillage, les tranchants (43, 43a ; 43', 43a'), s'appliquant l'un contre l'autre à la même hauteur et sans jeu, fusionnent fonctionnellement en un unique tranchant (43', 43a'), caractérisé en ce que le dispositif est réalisé sous la forme d'une pince (20) en soi connue pour dénuder les extrémités libres de fils électriques, qui présente une paire de mâchoires de support (21, 22) pouvant être rapprochées et écartées par pivotement, et une paire de mâchoires de coupe (31, 32) pouvant être rapprochées et écartées par pivotement et pouvant être reculées à partir de la position d'entaillage, et en ce qu'une (40, 40) des paires de lames (40, 40 ; 40', 40') constitue l'équipement des mâchoires de coupe (31, 32), et l'autre paire de lames (40', 40') est disposée sur les mâchoires de support (21, 22) comme organe unique à l'aide duquel les mâchoires de support (21, 22) entrent en contact avec la partie de l'isolation restant sur le fil, et la maintiennent lors de l'enlèvement de la partie détachée de l'isolation.

2. Dispositif selon la revendication 1, caractérisé en ce que les lames à dénuder (40, 40') présentent, sur leur arête (44a) munie du tranchant (43, 43a), des parties terminales émoussées (43b) qui se situent à la même hauteur qu'une partie droite de tranchant (43) ou que les points terminaux (43aa) d'une partie de tranchant creusée en arc de cercle (43a).

3. Dispositif selon la revendication 2, caractérisé en ce qu'au moins une des mâchoires de coupe (31') est munie, d'une manière en soi connue, d'un bras porteur à ressort (54) présentant une gorge en forme de V (55), qui s'aligne avec un tranchant creusé en arc de cercle (43a) éventuellement présent.

4. Dispositif selon l'une quelconque des revendications précédentes, caractérisé en ce que la partie de tranchant (43, 43a) est flanquée, d'une manière en soi connue, de deux blocs de centrage (36) qui sont disposés à un écartement mutuel (e) dans au moins une des mâchoires de support (21, 22) et qui, en présence de parties terminales émoussées (43b) sur les lames (40, 40'), se trouvent dans la région de raccordement de ces parties terminales (43b) avec la partie acérée de tranchant (43, 43a).

5. Dispositif selon l'une quelconque des revendications précédentes, caractérisé en ce qu'il est conçu, d'une manière en soi connue, comme pince à dénuder en forme de pistolet.

FIG.1

FIG.2a.

FIG.2b

FIG.3

FIG.4

FIG. 5

8